# EUROPÄISCHE PATENTSCHRIFT

(11) **EP 2 105 033 B1**
(45) Veröffentlichungstag und Bekanntmachung des Hinweises auf die Patenterteilung: **14.04.2010**
(21) Anmeldenummer: 04820393.9
(22) Anmeldetag: 12.11.2004
(51) Int. Cl.: H04Q 1/14

(54) **VERTEILEREINRICHTUNG FÜR DIE KOMMUNIKATIONS- UND DATENTECHNIK**
DISTRIBUTOR DEVICE FOR USE IN COMMUNICATION AND DATA SYSTEMS TECHNOLOGY
DISPOSITIF DE DISTRIBUTION DESTINE AUX DOMAINES DE LA COMMUNICATION ET DE L'INFORMATIQUE

(30) Priorität: 25.11.2003 DE 10355017
(43) Veröffentlichungstag der Anmeldung: 30.09.2009
(73) Patentinhaber: ADC GmbH, 14167 Berlin (DE)
(72) Erfinder: NIJHUIS, Antony, 64397 Modautal-Brandau (DE)
(86) Internationale Anmeldenummer: PCT/EP2004/012815
(87) Internationale Veröffentlichungsnummer: WO 2005/060274

(56) Entgegenhaltungen:
- DE-A1- 10 236 361
- US-A- 5 602 723

## Beschreibung

Die Erfindung betrifft eine Verteilereinrichtung für die Kommunikations- und Datentechnik sowie ein zugehöriges Verteileranschlussmodul und ein zugehöriges Anschlussmodul.

Die bekannten Verteilereinrichtungen basieren vornehmlich auf Kupferanschluss-Technik, wobei die Adern als Twisted-Pair oder als Koaxial-Kabel angeschlossen werden. Wegen der stetig wachsenden zu übertragenden Datenmengen gewinnt zunehmend die optische Datenübertragung an Bedeutung. Dabei werden die Daten optisch übertragen, wobei die verwendeten Datenformate weitgehend international genormt sind. Die Umsetzung der optischen Signale in elektrische Signale erfolgt dabei beispielsweise mittels SDH/SONET-Multiplexer, die beispielsweise ein 2,5 Gigabit/s-Signal optisch auf E1-Kabel mit einer Übertragungsrate von ca. 2 Megabit/s heruntermultiplexen. Die E1-Kabel werden dann an die Verteilereinrichtung geführt. Die bekannten SDH/SONET-Multiplexer stellen dabei die aktive Technik dar und setzen das optische Signal in ein elektrisches Signal für die passive Verteilereinrichtung um. Aufgrund der Tatsache, dass SDH/SONET-Multiplexer und Verteilereinrichtung nicht immer in unmittelbarer Nähe zueinander aufgestellt werden können, stellen die Vielzahl von zu verlegenden E1-Kabel ein Montage- und Kostenproblem dar.

Aus der US 5 602 723 A ist eine Verteilereinrichtung für die Telekommunikations- und Datentechnik bekannt, umfassend mindestens ein Verteileranschlussmodul, wobei das Verteileranschlussmodul ein Gehäuse umfasst, in dem von außen zugänglich Eingangs- und Ausgangskontakte zum Anschließen von Leitungen, Kabeln oder Adern angeordnet sind.

Aus der DE 102 36 361 A1 ist ein Verteileranschlussmodul für die Telekommunikations- und Datentechnik bekannt, umfassend ein Gehäuse, in dem von außen zugänglich Eingangs- und Ausgangskontakte zum Anschließen von Leitungen und Adern angeordnet sind, wobei das Gehäuse mit einem Hohlraum ausgebildet ist, in dem mindestens eine Leiterplatte angeordnet ist, wobei die Eingangs- und Ausgangskontakte an den gegenüberliegenden Stirnseiten des Gehäuses angeordnet sind, wobei die Eingangskontakte einer Eingangsseite und die Ausgangskontakte einer Ausgangsseite zugeordnet sind, wobei die Eingangskontakte als mindestens zwei einander gegenüberliegende Reihen von Kontakten ausgebildet sind und die Ausgangskontakte als mindestens ein Steckverbinder ausgebildet sind, wobei mindestens zwei Eingangskontakte der ersten Reihe und mindestens zwei Eingangskontakte der zweiten Reihe mit den Ausgangskontakten des mindestens einen Steckverbinders verbunden sind, wobei die Eingangskontakte der ersten und zweiten Reihe über die mindestens eine Leiterplatte mit den Ausgangskontakten des Steckverbinders verbunden sind. Weiter können auf der Leiterplatte Funktions- und/oder Schutzelemente angeordnet sein, die elektrisch zwischen den Eingangs- und Ausgangskontakten angeordnet sind.

Der Erfindung liegt daher das technische Problem zugrunde, eine Verteilereinrichtung für die Telekommunikations- und Datentechnik zu schaffen, mittels derer die Montage vereinfacht wird.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Hierzu umfasst die Verteitereinrichtung mindestens ein weiteres Anschlussmodul, wobei das Anschlussmodul mindestens eine SDH/SONET-Transport-Schnittstelle und Ausgänge für elektrische Signale umfasst, wobei die Ausgänge des Anschlussmoduls mit den Eingängen der Verteileranschlussmoduls verbunden sind, wobei das Anschlussmodul mindestens einen Konverter (SDH/SONET-Multiplexer) zur Umsetzung von SDH/SONET-Transport-Signalen in E1-Signale und umgekehrt umfasst. Hierdurch wird die SDH/SONET-Multiplex-Funktionalität in die Verteilereinrichtung integriert, wobei sich der Mehraufwand bezüglich des Bauraums auf das Anschlussmodul beschränkt. Im Gegenzug kann jedoch vollständig auf die Verlegung der E1-Kabel vom SDH/SONET-Multiplexer zur Verteilereinrichtung verzichtet werden. Neben der Kostenersparnis für die E1-Kabel vereinfacht dies auch erheblich die Montage, da beispielsweise 63 E1-Kabel durch ein einziges Kabel ersetzt werden können. Dabei kann das Kabel für die SDH/SONET-Transport-Signale als elektrisches Kabel oder als optische Faser ausgebildet sein. Die Umsetzung der optischen Signale in elektrische Signale sowie das Multiplexen auf die verschiedenen Kanäle geschieht dann im Anschlussmodul. Dabei sei angemerkt, dass die Bezeichnungen Eingangs- und Ausgangskontakte hier nur zur besseren Orientierung gewählt wurden und sich auf die Übertragungsrichtung vom SDH/SONET-Multiplexer zur Verteilereinrichtung beziehen, wobei in der Realität die Übertragungsrichtung auch umgekehrt erfolgen kann.

In einer bevorzugten Ausführungsform sind die Ausgangskontakte des Anschlussmoduls und die Eingangskontakte des Verteileranschlussmoduls als hochpolige Steckverbinder ausgebildet. Unter hochpolig wird dabei ein Steckverbinder mit mindestens 8 Pins verstanden, wobei vorzugsweise die Anzahl der Pins erheblich höher ist. Vorzugsweise werden durch nur einen Steckverbinder die gesamten Verbindungen für ein Verteileranschlussmodul realisiert.

In einer weiteren bevorzugten Ausführungsform ist das Anschlussmodul mit einem externen Versorgungsspannungsanschluss ausgebildet, über den die aktive Technik innerhalb des Anschlussmoduls versorgt wird. Alternativ kann die Spannungsversorgung auch über Ethernet-Kabel erfolgen.

In einer weiteren bevorzugten Ausführungsform ist das Anschlussmodul mit einer externen Schnittstelle zur Programmierung ausgebildet, über die beispielsweise die CPU bzw. der Programmspeicher der CPU programmiert werden kann. Die Schnittstelle ist dabei vorzugsweise als RJ 45-Buchse ausgebildet.

In einer weiteren bevorzugten Ausführungsform ist das Anschlussmodul mit mindestens zwei Steckverbindern als Ausgangskontakte für mindestens zwei Verteileranschlussmodule ausgebildet, wobei vorzugsweise jedem Verteileranschlussmodul genau ein Steckverbinder zugeordnet ist. Weiter vorzugsweise ist die Anzahl der Steckverbinder ein ganzzahliges Vielfaches von 2. Somit kann beispielsweise ein einziges Anschlussmodul die Signale für beispielsweise acht Verteileranschlussmodule zur Verfügung stellen bzw. weiterleiten. Prinzipiell sind jedoch auch Lösungen mit einem externen HUB denkbar.

In einer weiteren bevorzugten Ausführungsform sind das Anschlussmodul und das Verteileranschlussmodul mit Schnappelementen zum Aufrasten auf Rundstangen ausgebildet. Dies ermöglicht zum einen ein einfaches Verschieben der Module sowie ein Drehen um eine Rundstange, wenn das Schnappelement von der anderen Rundstange gelöst wird. Des Weiteren kann dann über das Schnappelement bedarfsweise einfach eine Masseverbindung realisiert werden, wozu das Schnappelement aus einem elektrisch leitenden Material bestehen muss.

In einer weiteren bevorzugten Ausführungsform ist das Gehäuse des Anschlussmoduls mit Kühlkörpern ausgebildet, wobei diese vorzugsweise in das Gehäuse integriert sind. Weiter vorzugsweise sind die Kühlkörper als Kühlrippen oder als Kühlpunkte ausgebildet. Die Ausführungsform mit Kühlpunkten kommt vorzugsweise zur Anwendung, wenn das Anschlussmodul in unterschiedlichen Orientierungen befestigt werden soll, da dann unabhängig von der Orientierung eine ausreichende Konvektion gewährleistet ist.

Vorzugsweise sind die Ausgangskontakte des Verteileranschlussmoduls als Schneid-Klemm-Kontakte oder als Koaxial-Steckverbinder ausgebildet. Jedoch sind je nach Anwendungsfall auch andere Steckverbinder, wie beispielsweise RJ-45, möglich.

In einer weiteren bevorzugten Ausführungsform sind die Leitungs-Treiber für den Konverter bzw. SDH/SONET-Multiplexer des Anschlussmoduls in den Verteileranschlussmodulen angeordnet. Handelt es sich bei dem Konverter um eine STM1-Karte, so werden die dazugehörigen Line Driver und Transformatoren im Verteileranschlussmodul angeordnet. Dies ermöglicht eine sehr kompakte Bauform für die Anschlussmodule, wobei der ohnehin vorhandene Bauraum im Verteileranschlussmodul ausgenutzt wird.

In einer weiteren bevorzugten Ausführungsform erfolgt die Spannungsversorgung der Leitungs-Treiber über mindestens einen Pol des hochpoligen Steckverbinders, so dass kein separater Anschluss für die Spannungsversorgung vorzusehen ist, sondern die Versorgungsspannung vom Anschlussmodul durchgeschleift wird.

In einer weiteren bevorzugten Ausführungsform sind der hochpolige Steckverbinder des Verteileranschlussmoduls und/oder die Leitungs-Treiber auf einer Leiterplatte innerhalb des Verteileranschlussmoduls angeordnet.

In einer weiteren bevorzugten Ausführungsform sind die Ausgangskontakte des Verteileranschlussmoduls als Schneid-Klemm-Anschlussleiste ausgebildet. Vorzugsweise sind hierzu die Schneid-Klemm-Kontakte mit Gabelkontakten ausgebildet, über die die elektrische und mechanische Verbindung zur Leiterplatte erfolgt. Die Schneid-Klemm-Anschlussleiste ist dabei vorzugsweise derart ausgebildet, dass die Schneid-Klemm-Kontakte im zugehörigen Gehäuse abgestützt sind. Dadurch können die Schneid-Klemm-Kontakte vor dem Einbau bereits beschaltet werden und die vollbeschaltete Schneid-Klemm-Anschlussleiste abgezogen werden, beispielsweise um eine defekte Leiterplatte auszutauschen.

In einer weiteren bevorzugten Ausführungsform sind den Schneid-Klemm-Anschlussleisten Drahtführungselemente zugeordnet, die Kanäle aufweisen, die von den Seiten des Drahtführungselementes zur Stirnseite führen, wobei vorzugsweise die Kanäle derart gestaltet sind, dass alle notwendigen Adern auch von einer Seite alleine eingeführt werden können.

Die Erfindung wird nachfolgend anhand eines bevorzugten Ausführungsbeispieles näher erläutert. Die Fig. zeigen:
- Fig. 1: eine Prinzipdarstellung der Übertragung von einem SDH/SONET-Multiplexer zu einer Verteilereinrichtung (Stand der Technik),
- Fig. 2: eine Prinzipdarstellung der Übertragung gemäß der Erfindung,
- Fig. 3: eine perspektivische Darstellung einer erfindungsgemäßen Verteilereinrichtung,
- Fig. 4: eine perspektivische Darstellung eines Verteileranschlussmoduls,
- Fig. 5: eine Explosionsdarstellung eines Anschlussmoduls,
- Fig. 6: eine perspektivische Darstellung des Anschlussmoduls im Zusammengesetzten Zustand,
- Fig. 7: eine erste perspektivische Darstellung eines Drahtführungselementes und
- Fig. 8: eine zweite perspektivische Darstellung des Drahtführungselementes.

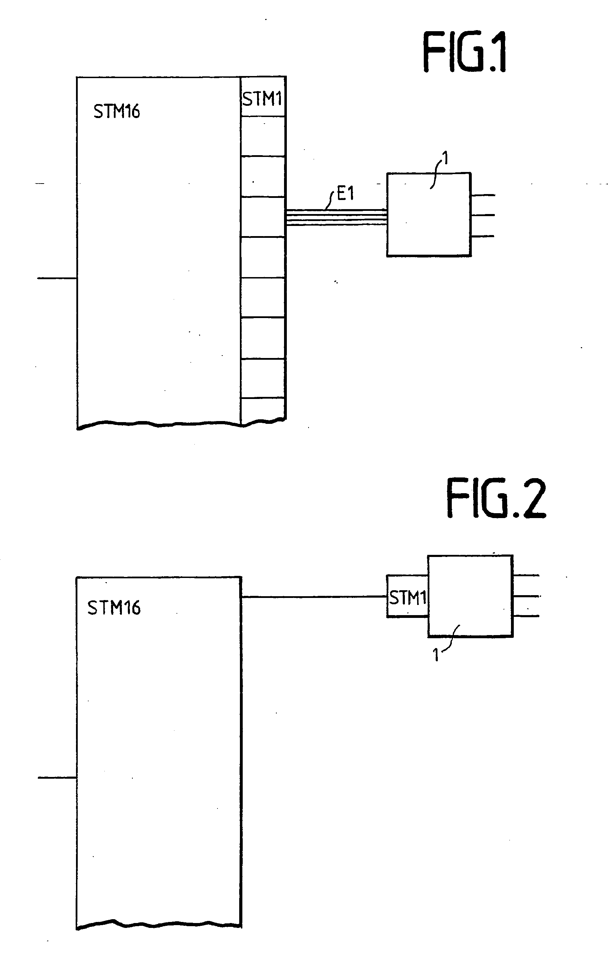

In der Fig. 1 ist schematisch die Verbindung zwischen einem SDH/SONET-Multiplexer, beispielsweise einem ADM (Add/Drop Multiplexer) und einer Verteilereinrichtung 1 dargestellt. Dabei wird ein breitbandiges optisches Signal von STM16- nach STM1-Karten gemultiplext, wobei beispielsweise am Ausgang einer STM1-Karte 63 E1-Kabel angeschlossen und zur Verteilereinrichtung 1 geführt werden. In der Verteilereinrichtung 1 findet dann eine Umsetzung auf Twisted Pair oder Koaxial-Ausgänge statt. Die gesamte aktive Technik ist dabei im SDH/SONET-Multiplexer angeordnet, wohingegen die Verteilereinrichtung nur passive Technik beinhaltet.

In der Fig. 2 ist nun das Grundprinzip der Erfindung dargestellt, einen Teil der aktiven Technik aus dem SDH/SONET-Multiplexer in der Verteilereinrichtung 1 anzuordnen. Hierdurch kann die Übertragung zwischen diesem "Rest-SDH/SONET-Multiplexer" und der Verteilereinrichtung optisch mittels Lichtwellenleitern erfolgen, wobei die Konvertierung optisch ↔ elektrisch sowie der Multiplex-Vorgang in der Verteilereinrichtung erfolgt. Nachfolgend wird nun eine spezielle Form der Integration näher erläutert.

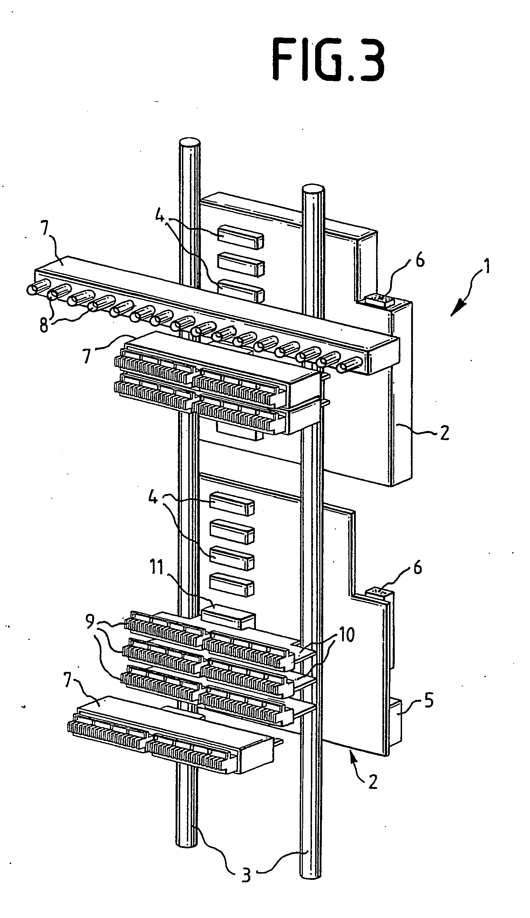

In der Fig. 3 ist perspektivisch eine erfindungsgemäße Verteilereinrichtung 1 dargestellt. Die dargestellte Verteilereinrichtung 1 umfasst zwei Anschlussmodule 2, wobei das untere Anschlussmodul 2 ohne Gehäuserückwand dargestellt ist. Die Anschlussmodule 2 werden über nicht sichtbare Schnappelemente auf Rundstangen 3 aufgerastet. Die Anschlussmodule 2 umfassen jeweils acht Steckverbinder 4, einen Versorgungsspannungsanschluss 5 sowie eine SDH/SONET-Transport-Schnittstelle 6 für mindestens einen Lichtwellenleiter. Des Weiteren umfasst die Verteilereinrichtung 1 mehrere Verteileranschlussmodule 7, wobei das obere Verteileranschlussmodul 7 mit Koaxial-Steckverbindern 8 als Ausgangskontakte ausgebildet ist, wohingegen die übrigen Verteileranschlussmodule 7 Schneid-Klemm-Anschlussleisten 9 als Ausgangskontakte aufweisen. Im unteren Bereich sind die Verteileranschlussmodule 7 ohne Gehäuse dargestellt, so dass man eine im inneren des Verteileranschlussmoduls 7 angeordnete Leiterplatte 10 erkennt, auf die die Schneid-Klemm-Anschlussleisten 9 aufgesteckt sind. Auf der gegenüberliegenden Seite der Leiterplatte 10 ist ein Steckverbinder 11 angeordnet. Der Steckverbinder 11 bildet dabei mit dem Steckverbinder 4 eine Steckverbindung.

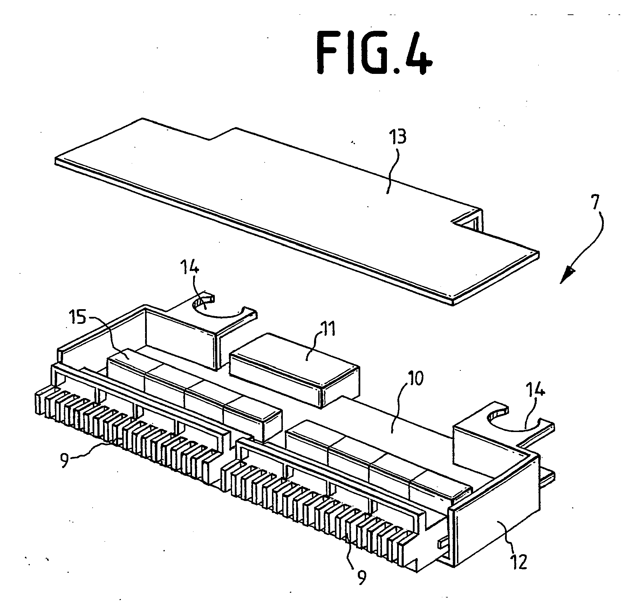

In der Fig. 4 ist das Verteileranschlussmodul 7 im Detail dargestellt. Das Verteileranschlussmodul 7 umfasst ein Gehäuse, das aus einem Unterteil 12 und einem Deckel 13 besteht, wobei der Deckel 13 noch Teile einer Rückwand umfasst. Das Unterteil 12 besteht aus einer Bodenplatte, Seitenwänden sowie Teilen der Rückwand, an denen die Schnappelemente 14 zum Aufrasten auf die Rundstangen 3 ausgebildet sind. Die Schnappelemente 14 können dabei entweder einstückig aus dem Unterteil 12 ausgeformt sein oder aber separate Elemente sein, die bedarfsweise mit der Leiterplatte 10 verbunden sein können, um beispielsweise eine Erdverbindung über die Rundstangen zu realisieren. Auf der Leiterplatte 10 ist der Steckverbinder 11 sowie acht Transformatoren 15 angeordnet. Weiter sind auf der Leiterplatte 10 acht Leitungs-Treiber, die vorzugsweise aus diskreten SMD-Bauelementen aufgebaut sind, angeordnet. Des Weiteren sind Abschlusswiderstände auf der Leiterplatte 10 vorhanden.

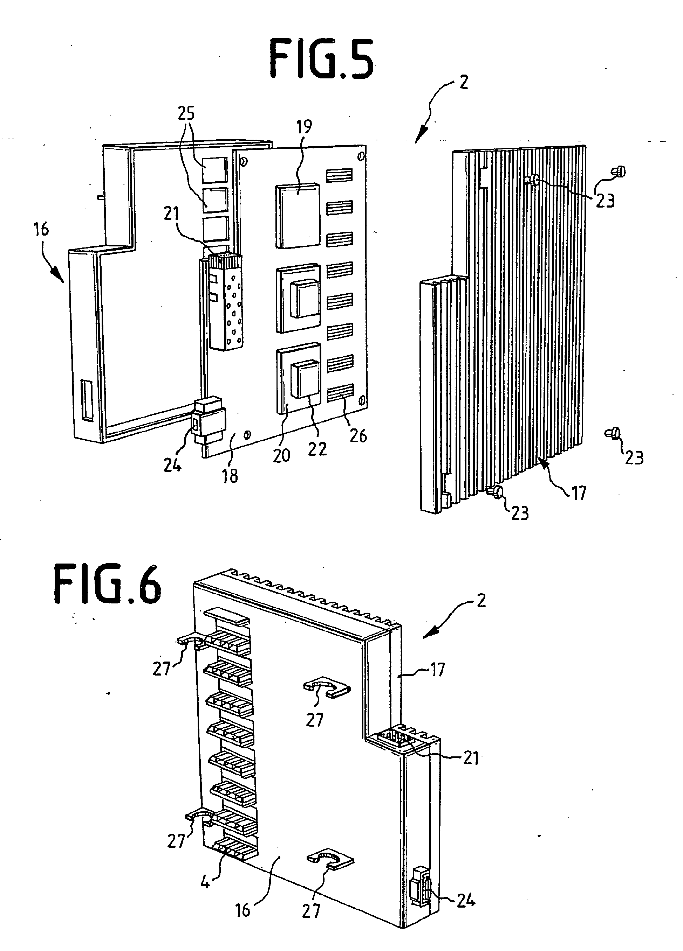

In der Fig. 5 ist schematisch das Anschlussmodul 2 in einer Explosionsdarstellung gezeigt. Das Anschlussmodul 2 umfasst ein erstes Gehäuseteil 16 und eine Gehäuserückwand 17 sowie eine Leiterplatte 18. Auf der Leiterplatte 18 ist die gesamte aktive Technik einer STM1-Karte mit Ausnahme der Transformatoren und Leitungs-Treiber aufgebracht, da letztere im Verteileranschlussmodul 7 angeordnet sind. Die aktive Technik umfasst eine CPU 19, zwei Multiplexer 20 sowie eine Schnittstelle 21 zum Anschluss mindestens eines Lichtwellenleiters. Das optische Signal wird in ein elektrisches Signal konvertiert und über den Multiplexer auf die einzelnen Pins der acht Steckverbinder 4 aufgeteilt. Entsprechend werden über den anderen Multiplexer 20 die ankommenden elektrischen Signale in ein optisches Signal gemultiplext. Aufgrund der hohen Verlustleistungen sind den beiden Multiplexern 20 Kühlkörper 22 zugeordnet, wobei die Verlustwärme über die Gehäuserückwand 17 abgeführt wird. Hierzu ist die Gehäuserückwand 17 mit Kühlrippen oder Kühlpunkten ausgebildet, wobei die Gehäuserückwand 17 mittels Schrauben 23 an der Leiterplatte 18 verschraubbar ist. Weiter umfasst das Anschlussmodul 2 eine Schnittstelle 24 für eine externe Spannungsversorgung sowie nicht dargestellte DC/DC-Wandler zum Transformieren der beispielsweise 48 V Eingangsspannung in 3,3 V Versorgungsspannung für die aktive Technik bzw. zum Transformieren der 3,3 V in 2,5 V für spezielle Elemente. Weiter umfasst das Anschlussmodul 2 eine nicht dargestellte Programmierschnittstelle, um beispielsweise den Programmspeicher der CPU 19 zu programmieren. In dem Gehäuseteil 16 sind Öffnungen 25 erkennbar, durch die die auf der Rückseite der Leiterplatte 18 angeordneten Steckverbinder 4 von außen zugänglich sind, wobei zugehörige Leiterbahnen 26 für die Steckverbinder 4 auf der dargestellten Leiterplatte 18 erkennbar sind. In der Fig. 6 ist das Anschlussmodul 2 im zusammengesetzten Zustand dargestellt, wobei das Gehäuseteil 16 im Bereich der Steckverbinder 4 freigeschnitten ist.

Dabei sind die Schnappelemente 27 auf der Leiterplatte 18 angeordnet. Die Steckverbinder 4 sind dabei beispielsweise als 48-polige Standardsteckverbinder ausgebildet, wobei bestimmte, vorab festgelegte Pins für die Signalübertragung und die restlichen Pins für die Versorgungsspannungsübertragung bzw. MasseVerbindung dienen.

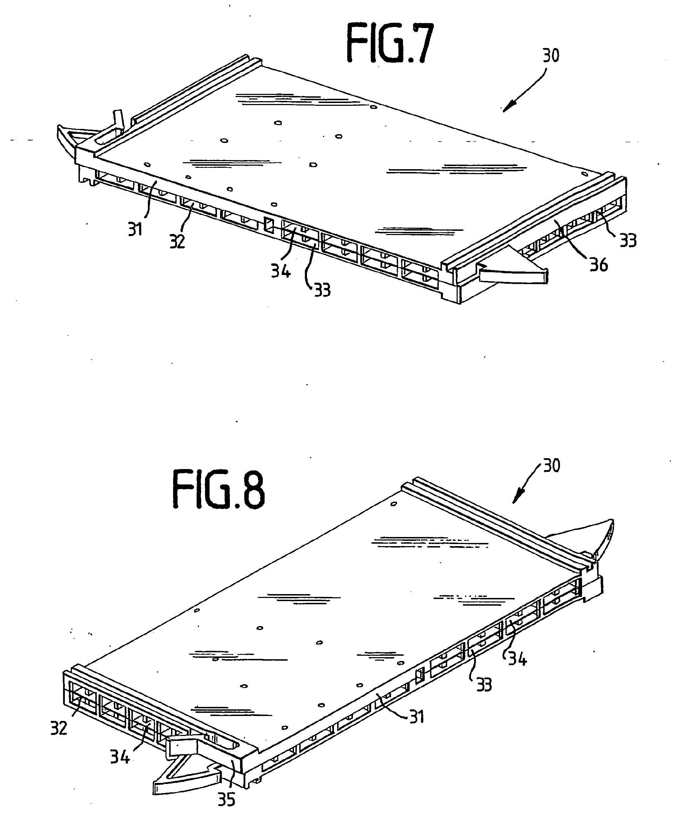

In einer Verteilereinrichtung 1 sind üblicherweise eine Vielzahl von Verteileranschlussmodulen 7 angeordnet, so dass eine entsprechend große Anzahl von Adern gehandhabt werden muss. Daher wird vorzugsweise jedem Verteileranschlussmodul 7 ein Drahtführungselement 30 zugeordnet, das oberhalb oder unterhalb des Verteileranschlussmoduls 7 angeordnet ist. Ein solches Drahtführungselement 30 ist in den Fig. 7 und 8 dargestellt. Das Drahtführungselement 30 ist hierzu an der Stirnseite 31 mit 24 Kanälen 32-34 ausgebildet, die innerhalb des Drahtführungselementes zu den Seiten 35, 36 geführt sind. Dabei werden jeweils 16 Kanäle für eine 16-DA-Anschlussleiste benötigt. Je nach Zugänglichkeit der Kanäle werden dabei entweder die Kanäle 32 und 33 oder die Kanäle 32 und 34 benutzt, so dass das Drahtführungselement 30 unabhängig von der Orientierung des Einbaus der Verteilereinrichtung 1 eine definierte Aderführung gewährleistet.

### Bezugszeichenliste

- 1: Verteilereinrichtung
- 2: Anschlussmodule
- 3: Rundstangen
- 4: Steckverbinder
- 5: Versorgungsspannungsanschluss
- 6: Schnittstelle
- 7: Verteileranschlussmodule
- 8: Koaxial-Steckverbinder
- 9: Schneid-Klemm-Anschlussleisten
- 10: Leiterplatte
- 11: Steckverbinder
- 12: Unterteil
- 13: Deckel
- 14: Schnappelemente
- 15: Transformatoren
- 16: Gehäuseteil
- 17: Gehäuserückwand
- 18: Leiterplatte
- 19: CPU
- 20: Multiplexer
- 21: Schnittstelle
- 22: Kühlkörper
- 23: Schrauben
- 24: Schnittstelle
- 25: "Öffnungen
- 26: Leiterbahnen
- 27: Schnappelemente
- 30: Drahtführungselement
- 31: Stirnseite
- 32-34: Kanäle
- 35,36: Seiten

## Patentansprüche

1. Verteilereinrichtung für die Kommunikations- und Datentechnik, umfassend mindestens ein Verteileranschlussmodul, wobei das Verteileranschlussmodul ein Gehäuse umfasst, in dem von außen zugänglich Eingangs- und Ausgangskontakte zum Anschließen von Leitungen, Kabeln oder Adern angeordnet sind,
**dadurch gekennzeichnet, dass**
die Verteilereinrichtung (1) mindestens ein weiteres Anschlussmodul (2) umfasst, wobei das Anschlussmodul (2) mindestens eine SDH/SONET-Transport-Schnittstelle (6) und Ausgänge für elektrische Signale umfasst, wobei die Ausgänge des Anschlussmoduls (2) mit den Eingängen des Verteileranschlussmoduls (7) verbunden sind, wobei das Anschlussmodul (2) mindestens einen Konverter zur Umsetzung von SDH/SONET-Transport-Signalen in E1-Signale und umgekehrt umfasst.

2. Verteilereinrichtung nach Anspruch 1, **dadurch gekennzeichnet, dass** die Ausgangskontakte des Anschlussmoduls (2) und die Eingangskontakte des Verteileranschlussmoduls (7) als hochpolige Steckverbinder (4, 11) ausgebildet sind.

3. Verteilereinrichtung nach Anspruch 1 oder 2, **dadurch gekennzeichnet, dass** das Anschlussmodul (2) mit einem externen Versorgungsspannungsanschluss (24) ausgebildet ist.

4. Verteilereinrichtung nach einem der vorangegangenen Ansprüche, **dadurch gekennzeichnet, dass** das Anschlussmodul (2) mit einer externen Schnittstelle zur Programmierung ausgebildet ist.

5. Verteilereinrichtung nach einem der vorangegangenen Ansprüche, **dadurch gekennzeichnet, dass** das Anschlussmodul (2) mit mindestens zwei Steckverbindern (4) als Ausgangskontakte für mindestens zwei Verteileranschlussmodule (7) ausgebildet ist.

6. Verteilereinrichtung nach einem der vorangegangenen Ansprüche, **dadurch gekennzeichnet, dass** das Anschlussmodul (2) und das Verteileranschlussmodul (7) mit Schnappelementen (27, 14) zum Aufrasten auf Rundstangen (3) ausgebildet ist.

7. Verteilereinrichtung nach einem der vorangegangenen Ansprüche, **dadurch gekennzeichnet, dass** das Gehäuse (16, 17) des Anschlussmoduls (2) mit Kühlkörpern ausgebildet ist.

8. Verteilereinrichtung nach Anspruch 7, **dadurch gekennzeichnet, dass** die Kühlkörper als Kühlrippen oder als Kühlpunkte ausgebildet sind.

9. Verteilereinrichtung nach einem der vorangegangenen Ansprüche, **dadurch gekennzeichnet, dass** die Ausgangskontakte des Verteileranschlussmoduls (7) als Schneid-Klemm-Kontakte oder als Koaxial-Steckverbinder (8) ausgebildet sind.

10. Verteilereinrichtung nach einem der vorangegangenen Ansprüche, **dadurch gekennzeichnet, dass** die Leitungs-Treiber für den Konverter des Anschlussmoduls (2) in den Verteileranschlussmodulen (7) angeordnet sind.

11. Verteilereinrichtung nach Anspruch 10, **dadurch gekennzeichnet, dass** die Spannungsversorgung der Leitungs-Treiber über mindestens einen Pol des hochpoligen Steckverbinders (11) erfolgt.

12. Verteilereinrichtung nach einem der Ansprüche 10 oder 11, **dadurch gekennzeichnet, dass** der hochpolige Steckverbinder (11) und/oder die Leitungs-Treiber auf einer Leiterplatte (10) angeordnet sind.

13. Verteilereinrichtung nach einem der Ansprüche 9 bis 12, **dadurch gekennzeichnet, dass** die Ausgangskontakte des Verteileranschlussmoduls (7) als Schneid-Klemm-Anschlussleiste (9) ausgebildet ist.

14. Verteilereinrichtung nach Anspruch 13, **dadurch gekennzeichnet, dass** die Schneid-Klemm-Anschlussleiste (9) über Gabelkontakte mit der Leiterplatte (10) verbunden ist.

15. Verteilereinrichtung nach einem der vorangegangenen Ansprüche, **dadurch gekennzeichnet, dass** den Schneid-Klemm-Anschlussleisten (9) brahtführungselemente (30) zugeordnet sind.

16. Verteilereinrichtung nach Anspruch 15, **dadurch gekennzeichnet, dass** das Drahtführungselement (30) seitlich mit Kanälen (32-34) ausgebildet ist, die zur Stirnseite (31) des Drahtführungselementes (30) führen.

17. Verteilereinrichtung nach Anspruch 16, **dadurch gekennzeichnet, dass** die Kanäle (32-34) an beiden Seiten (35, 36) des Drahtführungselementes (30) angeordnet sind.

18. Verteilereinrichtung nach Anspruch 17, **dadurch gekennzeichnet, dass** an einer Hälfte der Stirnfläche (31) des Drahtführungselementes (30) übereinander Kanäle (33, 34) angeordnet sind, wobei die oberen und unteren Kanäle (33, 34) zu unterschiedlichen Seiten (35, 36) des Drahtführungselementes (30) geführt sind, und die Kanäle (32) der anderen Hälfte der Stirnfläche (31) nur zu einer Seite (35) geführt sind, wobei die Kanäle (32, 34) an der einen Seite (35) für beide Hälften der Stirnfläche (31) übereinander angeordnet sind.

## Claims

1. Distribution device for communications and data technology, having at least one distribution board connection module, with the distribution board connection module having a housing in which externally accessible input and output contacts are arranged for connection of lines, cables or conductors,
**characterized in that**
the distribution device (1) has at least one further connection module (2), with the connection module (2) having at least one SDH/SONET transport interface (6) and outputs for electrical signals, with the outputs of the connection module (2) being connected to the inputs of the distribution board connection module (7), and with the connection module (2) having at least one converter for conversion of SDH/SONET transport signals to E1 signals, and vice versa.

2. Distribution device according to Claim 1, **characterized in that** the output contacts of the connection module (2) and the input contacts of the distribution board connection module (7) are in the form of multipole plug connectors (4, 11).

3. Distribution device according to Claim 1 or 2, **characterized in that** the connection module (2) has an external supply voltage connection (24).

4. Distribution device according to one of the preceding claims, **characterized in that** the connection module (2) has an external interface for programming.

5. Distribution device according to one of the preceding claims, **characterized in that** the connection module (2) has at least two plug connectors (4) as output contacts for at least two distribution board connection modules (7).

6. Distribution device according to one of the preceding claims, **characterized in that** the connection module (2) and the distribution board connection module (7) have snap-action elements (27, 14) for latching onto round rods (3).

7. Distribution device according to one of the preceding claims, **characterized in that** the housing (16, 17) of the connection module (2) has heat sinks.

8. Distribution device according to Claim 7, **characterized in that** the heat sinks are in the form of cooling ribs or cooling points.

9. Distribution device according to one of the preceding claims, **characterized in that** the output contacts of the distribution board connection module (7) are in the form of insulation-displacement terminal contacts or coaxial plug connectors (8).

10. Distribution device according to one of the preceding claims, **characterized in that** the line drivers for the converter for the connection module (2) are arranged in the distribution board connection modules (7).

11. Distribution device according to Claim 10, **characterized in that** the voltage for the line drivers is supplied via at least one pole of the multipole plug connector (11).

12. Distribution device according to one of Claims 10 or 11, **characterized in that** the multipole plug connector (11) and/or the line drivers are/is arranged on a printed circuit board (10).

13. Distribution device according to one of Claims 9 to 12, **characterized in that** the output contacts of the distribution board connection module (7) are in the form of an insulation-displacement terminal connecting strip (9).

14. Distribution device according to Claim 13, **characterized in that** the insulation-displacement terminal connecting strip (9) is connected to the printed circuit board (10) via fork contacts.

15. Distribution device according to one of the preceding claims, **characterized in that** the insulation-displacement terminal connecting strips (9) have associated conductor guidance elements (30).

16. Distribution device according to Claim 15, **characterized in that** the conductor guidance element (30) has channels (32-34) at the sides, which lead to the end face (31) of the conductor guidance element (30).

17. Distribution device according to Claim 16, **characterized in that** the channels (32-34) are arranged on both sides (35, 36) of the conductor guidance element (30).

18. Distribution device according to Claim 17, **characterized in that** channels (33, 34) are arranged one above the other on one half of the end surface (31) of the conductor guidance element (30), with the upper and lower channels (33, 34) being routed on different sides (35, 36) of the conductor guidance element (30), and the channels (32) in the other half of the end surface (31) being routed on only one side (35), with the channels (32, 34) on the one side (35) being arranged one above the other for both halves of the end surface (31).

## Revendications

1. Dispositif de distribution destiné aux domaines de la communication et de l'informatique, comprenant au moins un module de raccordement de distributeur, le module de raccordement de distributeur comprenant un boîtier dans lequel sont disposés les contacts d'entrée et de sortie accessibles de l'extérieur servant à raccorder des gaines, des câbles ou des fils, **caractérisé en ce que** le dispositif de distribution (1) comprend au moins un autre module de raccordement (2), le module de raccordement (2) comprenant au moins une interface de transport SDH/SONET (6) et des sorties pour les signaux électriques, les sorties du module de raccordement (2) étant reliées aux entrées du module de raccordement de distributeur (7), le module de raccordement (2) comprenant au moins un convertisseur pour transformer des signaux de transport SDH/SONET en signaux E1 et inversement.

2. Dispositif de distribution selon la revendication 1, **caractérisé en ce que** les contacts de sortie du module de raccordement (2) et les contacts d'entrée du module de raccordement de distributeur (7) sont réalisés sous la forme de connecteurs enfichables (4, 11) à pôle haut.

3. Dispositif de distribution selon la revendication 1 ou 2, **caractérisé en ce que** le module de raccordement (2) est réalisé avec un raccord d'alimentation en tension (24) externe.

4. Dispositif de distribution selon l'une quelconque des revendications précédentes, **caractérisé en ce que** le module de raccordement (2) est réalisé avec une interface de programmation externe.

5. Dispositif de distribution selon l'une quelconque des revendications précédentes, **caractérisé en ce que** le module de raccordement (2) est réalisé avec au moins deux connecteurs enfichables (4) prenant la forme de contacts de sortie pour au moins deux modules de raccordement de distributeur (7).

6. Dispositif de distribution selon l'une quelconque des revendications précédentes, **caractérisé en ce que** le module de raccordement (2) et le module de raccordement de distributeur (7) sont réalisés avec des éléments à encliquetage (27, 14) pour permettre un encliquetage sur les tiges arrondies (3).

7. Dispositif de distribution selon l'une quelconque des revendications précédentes, **caractérisé en ce que** le boîtier (16, 17) du module de raccordement (2) est réalisé avec des corps de refroidissement.

8. Dispositif de distribution selon la revendication 7, **caractérisé en ce que** les corps de refroidissement sont réalisés sous la forme de cannelures de refroidissement ou de barres de refroidissement.

9. Dispositif de distribution selon l'une quelconque des revendications précédentes, **caractérisé en ce que** les contacts de sortie du module de raccordement de distributeur (7) sont réalisés sous la forme de contacts coupant-serrant ou de connecteurs enfichables coaxiaux (8).

10. Dispositif de distribution selon l'une quelconque des revendications précédentes, **caractérisé en ce que** les répéteurs terminaux du convertisseur du module de raccordement (2) sont disposés dans les modules de raccordement de distributeur (7).

11. Dispositif de distribution selon la revendication 10, **caractérisé en ce que** l'alimentation en tension des répéteurs terminaux se produit via au moins un pôle du connecteur enfichable (11) à pôle haut.

12. Dispositif de distribution selon l'une quelconque des revendications 10 ou 11, **caractérisé en ce que** le connecteur enfichable (11) à pôle haut et/ou les répéteurs terminaux (10) sont disposés sur une plaque conductrice.

13. Dispositif de distribution selon l'une quelconque des revendications 9 à 12, **caractérisé en ce que** les contacts de sortie du module de raccordement de distributeur (7) sont réalisés sous la forme d'une réglette de raccord coupant-serrant (9).

14. Dispositif de distribution selon la revendication 13, **caractérisé en ce que** la réglette de raccord coupant-serrant (9) est reliée à la plaque conductrice (10) via des contacts en fourche.

15. Dispositif de distribution selon l'une quelconque des revendications précédentes, **caractérisé en ce que** les réglettes de raccord coupant-serrant (9) (30) sont associées à des éléments passe-câble.

16. Dispositif de distribution selon la revendication 15, **caractérisé en ce que** l'élément passe-câble (30) est réalisé en côté avec des canaux (32-34) conduisant à la face frontale (31) de l'élément passe-câble (30).

17. Dispositif de distribution selon la revendication 16, **caractérisé en ce que** les canaux (32-34) sont disposés des deux côtés (35, 36) de l'élément passe-câble (30).

18. Dispositif de distribution selon la revendication 17, **caractérisé en ce que** des canaux (33, 34) sont disposés l'un au-dessus de l'autre au niveau d'une moitié de la surface frontale (31) de l'élément passe-câble (30), les canaux (33, 34) supérieur et inférieur étant amenés à différents côtés (35, 36) de l'élément passe-câble (30) et les canaux (32) de l'autre moitié de la surface frontale (31) n'étant amenés qu'à un côté (35), les canaux (32, 34) étant disposés l'un sur l'autre au niveau du côté (35) prévu pour les deux moitiés de la surface frontale (31).
